# EUROPÄISCHE PATENTSCHRIFT

(11) **EP 0 957 064 B1**
(45) Veröffentlichungstag und Bekanntmachung des Hinweises auf die Patenterteilung: **01.10.2003**
(21) Anmeldenummer: 99105439.6
(22) Anmeldetag: 17.03.1999
(51) Int. Cl.: C01B 13/34, B01J 2/00

(54) **Verfahren zur Herstellung von pulverförmigen heterogenen Stoffen**
Process for preparing powdery heterogeneous materials
Procédé pour la préparation des matières pulvérulentes hétérogènes

(30) Priorität: 12.05.1998 DE 19821144
(43) Veröffentlichungstag der Anmeldung: 17.11.1999
(73) Patentinhaber: OMG AG & Co. KG, 63457 Hanau (DE)
(72) Erfinder: Foerster, Martin Dr., 63654 Büdingen (DE); Gutsch, Andreas Dr., 63695 Ranstadt (DE); Domesle, Rainer, 63755 Alzenau (DE); Kressling, Ralf, 63694 Limeshain (DE); Stöhr, Oliver, 36037 Fulda (DE)
(74) Vertreter: Stellbrink, Axel

(56) Entgegenhaltungen:
- EP-A- 0 295 389
- EP-A- 0 677 326
- EP-A- 0 681 989
- WO-A-89/08610

## Beschreibung

Die Erfindung betrifft ein Verfahren zur Herstellung von pulverförmigen heterogenen Stoffen.

Es ist bekannt, pulverförmige heterogene Stoffe aus Oxiden und Salzen herzustellen, indem man von einer Suspension, Dispersion oder einer Emulsion ausgeht.

Üblicherweise werden für Suspensionen, Dispersionen oder Emulsionen Sprühtrockner (oder ähnliches) zum Trocknen eingesetzt. Daran schließt sich ein Drehrohr zum Kalzinieren (oder ähnliches) an. Die Pulververluste durch Reinigung und Handling aber auch während des Betriebs sind beziehungsweise können erheblich sein, und/oder der Personalaufwand ist hoch.

Als Alternative wird das Trocknen und Kalzinieren im Batch genutzt (zum Beispiel in Gefäßen im Muffelofen). Dabei besteht jedoch die Gefahr einer sehr breiten Verteilung der Produktqualität durch Diffusionsprozesse und Temperaturgradienten im Pulver.

Die WO 89/08610 beschreibt ein Verfahren zur Herstellung eines hochoberflächigen Metalloxidschaums. Hierbei wird eine Lösung von Vorstufen des Metalloxids in einen Brenner eingesprüht und in den Metalloxidschaum überführt. Auf Grund der Herstellungsweise handelt es sich bei dem Metalloxidschaum um ein in seiner Zusammensetzung homogenes Material.

Die EP 0 681 989 A1 beschreibt ein Verfahren zur Herstellung eines Multielement-Oxidpulvers. Hierbei wird ebenfalls eine Lösung von Vorstufen des Oxidpulvers in einen Brenner eingesprüht und in das Oxidpulver überführt. Auch dieses Verfahren liefert nur ein homogenes Pulvermaterial.

Aufgabe der vorliegenden Erfindung ist es, ein Verfahren zur Herstellung von pulverförmigen, heterogenen Stoffen anzugeben.

Diese Aufgabe wird gelöst durch ein Verfahren zur Herstellung von pulverförmigen, heterogenen Stoffen, welche ein mit Oxiden, Metallen, Nitriden oder Carbiden beschichtetes Trägermaterial enthalten. Das Verfahren ist dadurch gekennzeichnet, daß man eine Dispersion oder Suspension, welche eine das Trägermaterial bildende Feststoffkomponente und eine gelöste Komponente enthalten, in einen turbulenten oder laminaren Brenner einführt, die Dispersion oder Suspension dort bei den dort eingestellten Bedingungen behandelt und dann das erhaltene Reaktionsgemisch in ein sich anschließendes durchströmtes Rohr führt und dort das erhaltene Pulver weiterbehandelt.

Die Dispersion oder Suspension kann im durchströmten Rohr, im folgenden auch als Hochtemperaturströmungsreaktor bezeichnet, als gasgetragenes Partikelkollektiv vorliegen.

Der Hochtemperaturströmungsreaktor kann durch Zufuhr von nichtbrennbaren heißen Gasen beheizt werden.

Der Hochtemperaturströmungsreaktor kann indirekt durch Aufheizung der den Reaktionsraum begrenzenden Wände beheizt werden.

Die Beheizung kann dabei durch elektrisches Plasma und/oder induktives Plasma erfolgen.

Dem Hochtemperaturströmungsreaktor kann zusätzlich hochenergetische Laserlichtstrahlung und/oder Mikrowellenenergie zugeführt werden.

Dem Hochtemperaturströmungsreaktor können neben der Dispersion oder Suspension nichtbrennbare reaktive Gase oder Dämpfe zugeführt werden, wobei das Reaktionsprodukt ein hochdisperser nanostrukturierter Feststoff sein kann, der sich an der Oberfläche der Dispersions- oder Suspensionspartikeln anlagert.

Das Reaktionsprodukt kann homogene molekulare Schichten auf den Dispersions- oder Suspensionspartikeln bilden, wobei die Dispersions- oder Suspensionspartikel mono- bzw. multimolekularen Schicht gecoatet werden.

Die nichtbrennbaren reaktiven Gase oder Dämpfe können Metallchloride und/oder metallorganische Verbindungen sowie Mischungen dieser Verbindungen sein.

Die Temperatur im Reaktionsraum kann oberhalb von 1000 °C sein.

Die Suspension oder Dispersion kann dem Reaktionsraum axial im Gleich- oder Gegenstrom oder radial zugeführt werden.

Die Dispersion oder Suspension kann dem Reaktionsraum radial zugeführt werden.

Die Dispersion oder Suspension kann eine Feststoffsuspension, eine Lösung, Pulver, Pasten, Schmelzen oder Granulat mit gelösten "Salzen", sein. Die Dispersion oder Suspension wird feinverteilt durch Zerstäuben, Zerwellen, als Nebel oder Strahl zudosiert.

Das in der Abbildung genannte Sekundärgas kann Luft, Umluft mit Sauerstoffgehalten zwischen 0 und 100 %, trocken oder feucht, Wasserdampf, andere Dämpfe oder Gase, Stickstoff und ähnliches sein.

Der Brenner kann eine bekannte Bauart mit pulsierender Verbrennung aufweisen. Ein derartiger Brenner wird beschrieben in dem Dokument DD 114 454.

Bevorzugt kann ein Brenner mit hoher Turbulenz zur Verbesserung des Stofftransportes eingesetzt werden. Insbesondere kann ein Drallbrenner mit eventuell überlagerter Pulsation eingesetzt werden.

Die flüssige Phase der Suspension oder Dispersion kann Wasser, Alkohol, flüssige organische Kohlenwasserstoffe oder organische Lösungsmittel sein.

Die in der Suspension oder Dispersion als Feststoff vorliegende Komponente kann einzeln oder im Gemisch sein: Oxide, Nitride oder Carbide von Aluminium, Silicium, Cer, Zirkon, Titan, auskristallisierte Salze von Aluminium, Silicium, Cer, Zirkon, Lanthan, Barium, Metalle wie zum Beispiel Nickel, Silber, Palladium, Gold, Rhodium, Platin, Ruß, organische Verbindungen.

Die gelösten bzw. ungelösten Salze können Nitrate, Acetate, Carbonate, Chloride von Aluminium, Cer, Silicium, Zirkon, Titan, Lanthan, Barium, Platin, Rhodium, Palladium, Irdium, Kalium, Calcium sowie Ammonium sowie Mischungen dieser Komponenten sein.

Als Brennstoff kann man ein brennbares Gas, wie zum Beispiel Wasserstoff und/oder Methan, verwenden.

Die Temperatur in dem Brenner kann 500 bis 2000 °C betragen.

Über das Verhältnis von Sauerstoff (aus der Verbrennungsluft) zu Wasserstoff und die Mengenströme kann man die Temperatur nach dem Brenner und die reduzierende bzw. oxidierende Atmosphäre in dem durchströmten Rohr einstellen. Des weiteren können in das Rohr weitere reaktive oder inerte Gase und Dämpfe eingespeist werden.

Die Dispersion beziehungsweise Suspension des Feststoffes kann in die Flamme des Brenners eingedüst oder eingetropft werden.

Das Wasser beziehungsweise das Lösungsmittel verdampft und das entstehende Pulver wird bei hohen Temperaturen in der vorliegenden Gasatmosphäre kalziniert, oxidiert oder reduziert und gesintert. Die Verweilzeit des Pulvers in der heißen Gasphase läßt sich durch die Abscheideeinrichtung (Zyklon, Hochtemperaturfilter) in Bereich von 0,01 Sekunden bis zu Minuten variieren. Der Stoff- und Wärmeübergang ist deutlich besser als im Drehrohr oder oder im Muffelofen.

Bei der Sprühkalzinierung sind die zu reinigenden Flächen im Vergleich zum Sprühtrockner mit anschließender Kalzinierung im Drehrohr erheblich niedriger und die Substanzverluste gering. Durch die Nutzung eines kontinuierlichen Prozesses ist die Verteilung der Produktqualität eng. Im Vergleich zum Drehrohr sind die Verluste bei dem An- und Abfahren sehr niedrig.

Das Pulver in Abluftfiltern/Zyklon eines Drehrohrs weist eine breite Verteilung der Produktqualität auf und ist häufig nicht zu gebrauchen, während bei dem erfindunsgemäßen Verfahren die Produktqualität im Abluftfilter/Zyklon eine sehr enge Verteilung aufweist.

Als weiterer Vorteil kann die in-situ-Behandlung der Abluft zum Tragen kommen. Die Salze sind häufig Nitrate, Acetate und Ammoniumverbindungen, deren Zersetzungsprodukte NO, NH₃ und CHNO durch die Einstellung der Zusammensetzung der heißen Abgase verringert werden oder in einem nachgeschalteten Katalysator ohne zusätzliche Aufheizung behandelt werden können.

Die Produkte, die hergestellt werden können, sind heterogene Pulver/Granulate, die mit Oxiden/Metallen/Nitriden/Carbiden imprägnierte/belegte/beschichtete Grundsubstanzen (Trägermaterial) (eventuell schalenförmig) sind.

Die erfindungsgemäß hergestellten Stoffe können als Katalysator, zur Herstellung von duktilen keramischen Bauteilen, zur Herstellung von quantenmechanisch aktiven Bauteilen, insbesondere Sensoren und photoelektrisch aktiven Emittern, sowie als Sauerstoffspeicher, NOₓ-Speicher, CₙHₘ-Speicher für die Katalyse und Adsorbentien, eingesetzt werden.

Das erfindungsgemäße Verfahren wird in der Zeichnung dargestellt und näher erläutert:

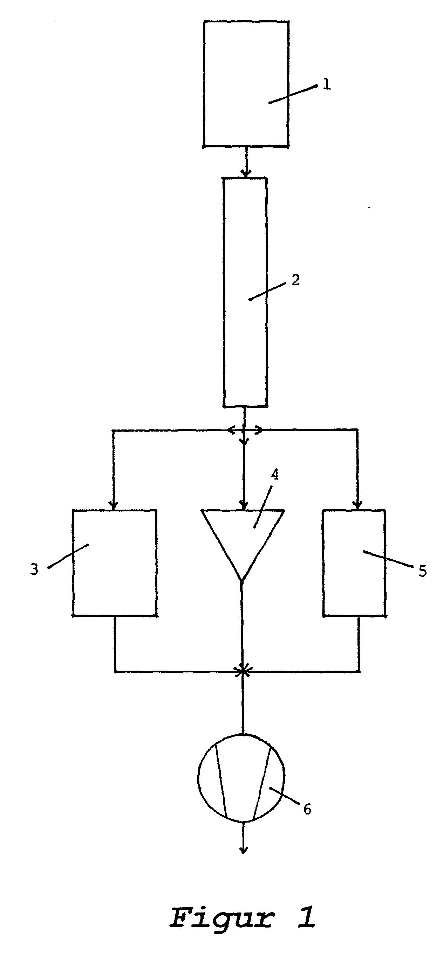

Es zeigt Figur 1 einen Brenner 1, an den das durchströmte Rohr 2 angeschlossen ist. An das durchströmte Rohr 2 sind der Wäscher 3, der Abscheider 4, der Filter 5 und das Gebläse 6 angeschlossen.

Gemäß dem erfindungsgemäßen Verfahren wird in den Brenner 1 eine Dispersion oder Suspension, ein Sekundärgas, Verbrennungsluft und Brennstoff eingeführt. Das in dem Brenner 1 umgesetzte Reaktionsgemisch wird in das durchströmte Rohr 2 eingeführt. In dem durchströmten Rohr 2 kann eine reduzierende oder oxidierende Gasatmosphäre eingerichtet sein. Das umgesetzte Reaktionsgemisch kann in dem durchströmten Rohr 2 derart behandelt werden, daß
a) die Dispersion oder Suspension getrocknet wird,
b) das Kristallwasser ausgetrieben wird,
c) das Pulver kalziniert wird, wobei Stoffe wie Nitrate, Acetate, Carbonate zu Gasen zersetzt werden,
d) das Pulver oxidiert oder reduziert wird,
e) das Pulver gesintert wird,
f) die spezifische Oberfläche des Pulvers reduziert wird.

Nach dem Durchgang durch das durchströmte Rohr 2 kann das Pulver in dem Wäscher 3 behandelt werden, wenn eine Dispersion hergestellt oder der Kontakt mit der Luft vermieden werden soll.

Alternativ kann das Pulver nach dem Verlassen des durchströmten Rohres 2 über die Abscheidevorrichtung 4 zum Beispiel für die kurzzeitige Behandlung bei hohen Temperaturen abgeschieden werden.

In einer weiteren Alternative kann das Pulver mittels des Filters 5 für eine längere Behandlung bei hohen Temperaturen abgeschieden werden.

Das Abgas kann mittels des Gebläses 6 ausgetragen werden.

### Beispiel 1

Eine Aluminiumoxid/Wassersuspension mit gelöstem Platin-Nitrat wird in den Brenner 1 eingeführt. Die Suspension enthält

| | |
|---|---|
| 400 g/l | Aluminiumoxid |
| 10 g/l | Platin-Nitrat |
| 800 g/l | Wasser. |

Als Brennstoff wird Wasserstoff eingesetzt.

Die Brennertemperatur beträgt 1.200 °C, und die Verweilzeit beträgt ca. 1 sek.

Das im Zyklon abgeschiedene Pulver ist trocken und weist keine Nitrat-Ionen mehr auf. Das Platin ist feindispers auf der Oberfläche des Aluminiumoxides abgeschieden.

### Beispiel 2

Eine wäßrige Suspension, die

| | |
|---|---|
| 400 g/l | Aluminiumoxid, |
| 100 g/l | Ceracetat, |
| 100 g/l | Zirkonnitrat und |
| 800 g/l | Wasser |

enthält, wird in dem Brenner 1 eingeführt. Als Brennstoff wird Erdgas eingesetzt. Die Brennertemperatur beträgt 1.000 °C. Das im Zyklon abgeschiedene Pulver ist trocken und enthält weder Acetat- noch Nitrat-Ionen. Das Ceroxid und das Zirkonoxid sind auf der Oberfläche des Aluminiumoxides feinverteilt abgeschieden.

### Beispiel 3

Ein feuchtes Pulver, bestehend aus

| | |
|---|---|
| 78 Gew.-% | Aluminiumoxid |
| 20 Gew.-% | Wasser |
| 2 Gew.-% | Platin-Nitrat, |

wird mit Erdgas bei einer Brennertemperatur von 900 °C behandelt.

Das im Zyklon abgeschiedene Pulver ist trocken und weist keine Nitrat-Ionen auf. Das Platin ist feinverteilt auf der Oberfläche des Aluminiumoxides abgeschieden.

## Patentansprüche

1. Verfahren zur Herstellung von pulverförmigen, heterogenen Stoffen, welche ein mit Oxiden, Metallen, Nitriden oder Carbiden beschichtetes Trägermaterial enthalten,
**dadurch gekennzeichnet,**
**daß** man eine Dispersion oder Suspension, welche eine das Trägermaterial bildende Feststoffkomponente und eine gelöste Komponente enthalten, in einen turbulenten oder laminaren Brenner einführt, die Dispersion oder Suspension dort bei den dort eingestellten Bedingungen behandelt und dann das erhaltene Reaktionsgemisch in ein sich anschließendes durchströmtes Rohr führt und dort das erhaltene Pulver weiterbehandelt.

2. Verfahren nach Anspruch 1,
**dadurch gekennzeichnet,**
**daß** man das erhaltene Pulver nach Verlassen des durchströmten Rohres einem Wäscher, einem Abscheider oder einem Filter zuführt.

3. Verfahren nach Anspruch 2,
**dadurch gekennzeichnet,**
**daß** die Dispersion oder Suspension im durchströmten Rohr als gasgetragenes Partikelkollektiv vorliegt.

4. Verfahren nach Anspruch 3,
**dadurch gekennzeichnet,**
**daß** das durchströmte Rohr durch eine im Rohr stattfindende exotherme Verbrennungsreaktion beheizt wird.

5. Verfahren nach Anspruch 3,
**dadurch gekennzeichnet,**
**daß** das durchströmte Rohr durch Zufuhr von nichtbrennbaren, heißen Gasen beheizt wird.

6. Verfahren nach Anspruch 3,
**dadurch gekennzeichnet,**
**daß** das durchströmte Rohr durch Aufhetzung der den Reaktionsraum begrenzenden Wände beheizt wird.

7. Verfahren nach Anspruch 3,
**dadurch gekennzeichnet,**
**daß** das durchströmte Rohr durch ein elektrisches Plasma und/oder induktives Plasma beheizt wird.

8. Verfahren nach einem der Ansprüche 4 bis 7,
**dadurch gekennzeichnet,**
**daß** dem durchströmten Rohr zusätzlich hochenergetische Laserlichtstrahlung und/oder Mikrowellenenergie zugeführt wird.

9. Verfahren nach einem der Ansprüche 4 bis 7,
**dadurch gekennzeichnet,**
**daß** dem durchströmten Rohr neben der Dispersion oder Suspension nichtbrennbare reaktive Gase oder Dämpfe zugeführt werden.

10. Verfahren nach Anspruch 9,
**dadurch gekennzeichnet,**
**daß** die nichtbrennbaren, reaktiven Gase oder Dämpfe Metallchloride und/oder metallorganische Verbindungen sowie Mischungen dieser Verbindung sind.

11. Verfahren nach Anspruch 1,
**dadurch gekennzeichnet,**
**daß** die Temperatur im durchströmten Rohr oberhalb von 1000 °C ist.

## Claims

1. Process for the preparation of pulverulent heterogeneous substances which comprise a support material coated with oxides, metals, nitrides or carbides,
**characterized in that**
a dispersion or suspension, which contain a solid component which forms the support material and a dissolved component, is introduced into a turbulent or laminar burner, the dispersion or suspension is treated there under the conditions established there and the resulting reaction mixture is then led into a downstream flow-through tube and the resulting powder is further treated there.

2. Process according to claim 1,
**characterized in that**
after leaving the flow-through tube the resulting powder is fed to a washer, a separator or a filter.

3. Process according to claim 2,
**characterized in that**
the dispersion or suspension is present in the flow-through tube as a gas-borne group of particles.

4. Process according to claim 3,
**characterized in that**
the flow-through tube is heated by an exothermic combustion reaction which takes place in the tube.

5. Process according to claim 3,
**characterized in that**
the flow-through tube is heated by feeding in non-combustible hot gases.

6. Process according to claim 3,
**characterized in that**
the flow-through tube is heated by heating up the walls adjacent to the reaction space.

7. Process according to claim 3,
**characterized in that**
the flow-through tube is heated by an electrical plasma and/or inductive plasma.

8. Process according to one of claims 4 to 7,
**characterized in that**
a high-energy laser light beam and/or microwave energy is additionally fed to the flow-through tube.

9. Process according to one of claims 4 to 7,
**characterized in that**
in addition to the dispersion or suspension, non-combustible reactive gases or vapours are fed to the flow-through tube.

10. Process according to claim 9,
**characterized in that**
the non-combustible reactive gases or vapours are metal chlorides and/or organometallic compounds, as well as mixtures of this compound.

11. Process according to claim 1,
**characterized in that**
the temperature in the flow-through tube is above 1,000 °C.

## Revendications

1. Procédé de fabrication de matières pulvérulentes, hétérogènes contenant une matière de support avec des oxydes, métaux, nitrures ou carbures,
**caractérisé en ce qu'**
on introduit une dispersion ou suspension contenant des composants de matière solide formant la matière de support et un composant dissout dans un brûleur à écoulement turbulent ou laminaire,
on y traite la dispersion ou suspension dans les conditions réglées à ce niveau et on fait passer le mélange de réaction dans un tube de passage en aval pour continuer le traitement de la poudre.

2. Procédé selon la revendication 1,
**caractérisé en ce qu'**
à la sortie du tube de passage, on fait passer la poudre dans un laveur, un séparateur ou un filtre.

3. Procédé selon la revendication 2,
**caractérisé en ce que**
la dispersion ou suspension dans le tube de passage se présente sous la forme d'un ensemble de particules portées par le gaz.

4. Procédé selon la revendication 3,
**caractérisé en ce que**
le tube traversé est chauffé par une réaction de combustion exothermique produite dans le tube.

5. Procédé selon la revendication 3,
**caractérisé en ce que**
le tube de passage est chauffé par une alimentation en gaz chaud non combustible.

6. Procédé selon la revendication 3,
**caractérisé en ce que**
le tube de passage est chauffé par chauffage des parois délimitant la chambre de réaction.

7. Procédé selon la revendication 3,
**caractérisé en ce que**
le tube de passage est chauffé par un plasma électrique et/ou un plasma inductif.

8. Procédé selon l'une quelconque des revendications 4 à 7,
**caractérisé en ce qu'**
on fournit au tube de passage en plus un rayonnement de lumière laser fortement énergétique et/ou de l'énergie par micro-ondes.

9. Procédé selon l'une quelconque des revendications 4 à 7,
**caractérisé en ce qu'**
on fournit au tube de passage non seulement la dispersion ou la suspension mais également des gaz ou vapeurs réactifs non combustibles.

10. Procédé selon la revendication 9,
**caractérisé en ce que**
les gaz ou vapeurs réactifs non combustibles sont des combinaisons de chlorure métallique et/ou métallo-organique ainsi que des mélanges de ces combinaisons.

11. Procédé selon la revendication 1,
**caractérisé en ce que**
la température dans le tube de passage est supérieure à 1000°C.
